# EUROPÄISCHE PATENTSCHRIFT

(11) **EP 0 961 731 B1**
(45) Veröffentlichungstag und Bekanntmachung des Hinweises auf die Patenterteilung: **02.01.2004**
(21) Anmeldenummer: 97931776.5
(22) Anmeldetag: 04.07.1997
(51) Int. Cl.: B65D 1/02, B29C 49/04, B29C 49/22

(54) **KUNSTSTOFFHOHLKÖRPER MIT HOHER CHEMISCHER BESTÄNDIGKEIT**
HOLLOW PLASTIC STRUCTURE WITH A HIGH LEVEL OF CHEMICAL STABILITY
CORPS CREUX EN MATIERE PLASTIQUE DE HAUTE STABILITE CHIMIQUE

(30) Priorität: 05.07.1996 DE 19627226
(43) Veröffentlichungstag der Anmeldung: 08.12.1999
(73) Patentinhaber: Wella Aktiengesellschaft, 64274 Darmstadt (DE)
(72) Erfinder: KOHN, Udo, D-64289 Darmstadt (DE); STEIGERWALD, Franz, D-64347 Griesheim (DE)
(86) Internationale Anmeldenummer: PCT/EP1997/003543
(87) Internationale Veröffentlichungsnummer: WO 1998/001347

(56) Entgegenhaltungen:
- EP-A- 0 306 820
- EP-A- 0 365 266
- WO-A-95/07219
- WO-A-95/16554
- PATENT ABSTRACTS OF JAPAN vol. 96, no. 9, 30.September 1996 & JP 08 119248 A (TOPPAN PRINTING CO.), 14.Mai 1996,

## Beschreibung

Die Erfindung betrifft einen Kunststoffhohlkörper nach der Gattung des Oberbegriffs des Anspruchs 1 sowie ein Verfahren zur Herstellung eines solchen Kunststoffbehälters nach der Gattung des Oberbegriffs des Anspruchs 6.

Es besteht grundsätzlich das Problem, einen kostengünstigen und gebrauchsfreundlichen Hohlkörper mit hoher chemischer Beständigkeit und Schutzwirkung gegenüber Sauerstoff bei oxidationsempfindlichen Füllgütern bereitzustellen, wie z. B. Dauerwellpräparate auf Basis von Ammoniumthioglykolat, Haarfarben mit Ammoniak oder Monoethanolamin, Haartönungen mit direktziehenden Pigmenten auf Basis von Emulsionen, haarkosmetische Produkte mit einem Anteil von Alkohol ca. größer 30 %, und haarkosmetische Produkte mit niedrigem pH-Wert kleiner 4.

Es sind zwar (extrusionsgeblasene) Hohlkörper aus PVC mit einer hohen chemischen Beständigkeit bekannt, die aber mangelhafte ökologische Eigenschaften und eine Einschränkung bei bestimmten Recyclingverfahren aufweisen. Weiterhin sind (extrusionsgeblasene) Hohlkörper aus modifiziertem Polyethylenterephthalat (PET) bekannt. Diese modifizierten Polyester erhalten zum Beispiel durch eine Glykolmodifizierung eine höhere Schmelzviskosität, um so eine ausreichende Schlauchstabilität für das Extrusionsblasverfahren zu bekommen. Beim Einsatz dieses Materials für oben genannte Füllgüter findet jedoch ein chemischer Angriff statt, der zu Versprödungen, Trübungen, Erweichungen und Spannungsrissen führen kann.

Eine Verwendung von reinem Polyethylenterephthalat (PET) ist nur bei den Blasverfahren möglich, bei denen der Vorformling im Spritzgießprozeß herstellbar ist, da die Schmelzviskosität für das Verarbeitungsverfahren Extrusionsblasen zu niedrig ist. Hier ist zwar eine chemische Beständigkeit gegeben, jedoch erfordert die Entwicklung und Realisierung eines solchen Hohlkörpers aufgrund des Spritzblasverfahrens hohe Werkzeuginvestitionen, lange Entwicklungsvorlaufzeiten, einen hohen Aufwand bei einer Änderung der Hohlkörperform oder des Einsatzgewichtes, hohe Stückzahlen von min. 1 Mio. Stück jährlich aufgrund wirtschaftlicher Erfordernisse des Verfahrens.

Eine Verwendung von Polyethylennaphthalat (PEN) erbringt im Gegensatz zu PET auch eine hohe chemische Beständigkeit gegen Haarfarben, jedoch muß auch PEN im Spritzblasverfahren verarbeitet werden und besitzt so alle genannten Nachteile des PET.

Weiterhin ist der Einsatz von Mehrschichthohlkörpern auf Basis von Polyolefinen z. B. PE/PA möglich, allerdings mit folgenden Nachteilen: Anquellen des PE, Pigmentwanderung ins PE, Probleme mit den Schweißnähten im Hohlkörper, keine ausreichende Transparenz bei Bedarf erreichbar. Das Verfahren ist aufgrund von drei Schichten und des einzusetzenden Haftvermittlers ebenfalls teuer.

Aus der DE 44 15 549 A1 ist ein extrusionsgeblasener Dreischichthohlkörper bekannt mit den Schichten (von innen nach außen) PETG/Haftvermittler/Polyolefin. Hier wird nur eine Wasserdampfsperre und eine Wanderungssperre erreicht. Die Nachteile des Dreischichtverfahrens wie oben beschrieben existieren ebenfalls. Es ist kein transparenter Behälter herstellbar. Eine ausreichende chemische Beständigkeit wird ebenfalls nicht erreicht.

Die WO-A-95/16554 und WO-A-95/07219 offenbaren in einem Spritzgussblasverfahren hergestellte Kunststoffhohlkörper, nicht jedoch extrusionsgeblasene Kunststoffhohlkörper nach dem Oberbegriff des Anspruchs 1 bzw. des Anspruchs 6.

Außerdem sind extrusionsgeblasene Zweischichthohlkörper bekannt, die aus zwei affinen Materialien der gleichen Werkstoffgruppe bestehen und damit keinen Haftvermittler benötigen. Der Einsatz dieser Hohlkörper erfolgt z. B. beim Erzeugen von einer Glanzschicht auf Polyolefinkörpern. Hier wird die Hauptwandung aus einem nichtglänzenden Polyolyfin hoher Schmelzviskosität geblasen und eine Glanzschicht aus gleichem/ähnlichem Material niedriger Schmelzviskosität im Koextrusionsblasverfahren angebracht.

Der Erfindung liegt die Aufgabe zugrunde, einen gattungsgleichen Hohlkörper nach dem Oberbegriff des Anspruchs 1 bzw. ein Verfahren zum Herstellen eines gattungsgleichen Hohlkörpers nach dem Oberbegriff des Anspruchs 6 zu schaffen, der eine hohe chemische Beständigkeit und eine hohe Schutzwirkung gegenüber Sauerstoff bei oxidationsempfindlichen Füllgütern aufweist, ökologisch unproblematisch und kostengünstig herstellbar ist.

Diese Aufgabe wird gelöst nach dem kennzeichnenden Teil des Anspruchs 1 bzw. des Anspruchs 6.

Es handelt sich also um einen Zweischichthohlkörper mit einer Basisschicht aus extrusionsblasfähigem modifiziertem PET, vorzugsweise glykolmodifizierten PETG hoher Schmelzviskosität mit einer für die Extrusion eines hängenden Schlauches ausreichenden Schmelzfestigkeit und einer inneren Schutzschicht aus chemisch beständigerem Material der gleichen affinen, gut darauf haftenden Werkstoffgruppe der Polyester aus unmodifiziertem PET, Gemisch PET/PEN oder PEN niedriger Schmelzviskosität.

Durch diese Lösung ergeben sich die Vorteile von PVC, aber ohne deren Nachteile, nämlich daß ein chemisch beständiger, sauerstoffdichter Hohlkörper zur Verfügung steht, der ökologisch unproblematisch, gut recyclingfähig, ggf. transparent und glänzend ist und gleichzeitig eine kostengünstige Herstellung auch für niedrigere Stückzahlen bei geringeren Werkzeugkosten ermöglicht bei kurzen Realisierungszeiten und einfacher Variationsmöglichkeit der Hohlkörperabmessungen (Formgebung) und Einstellung (Wandstärke) von Einsatzgewicht.

Anhand eines Ausführungsbeispiels wird die Erfindung näher beschrieben.

Es zeigt:
- Figur 1: in einer Seitenansicht ein Ausführungsbeispiel mit einem lösbaren Verschluß;
- Figur 2: eine Weiterbildung der Verschlußfunktion, und
- Figur 3: einen extrudierten, hängenden Schlauch als Vorformling.

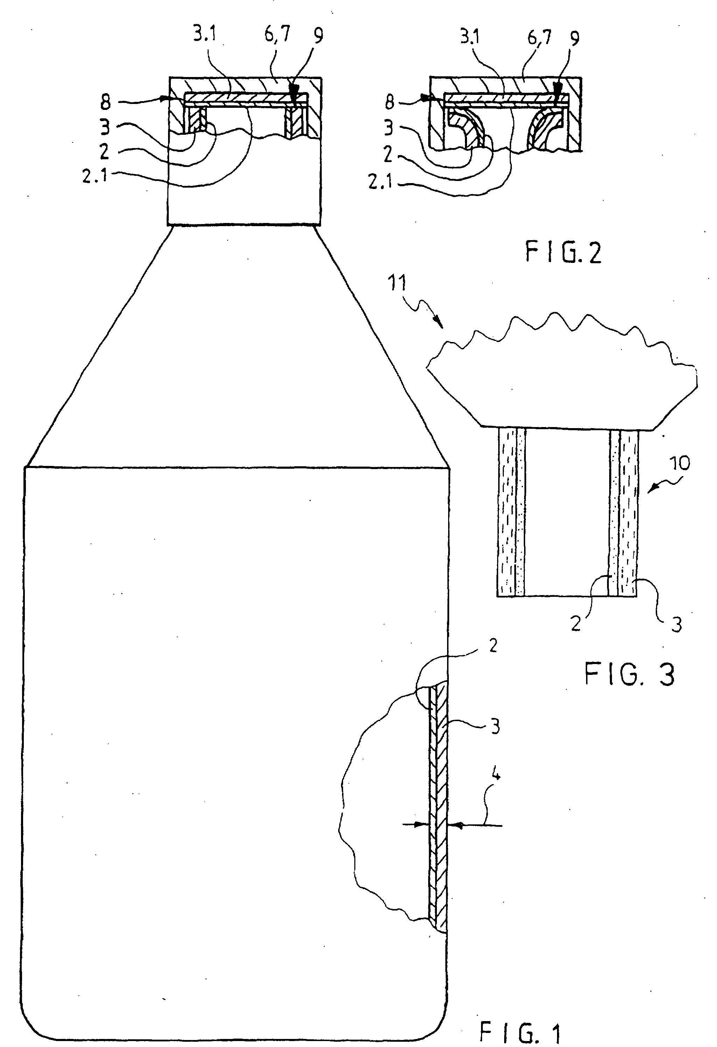

In der Figur 1 ist ein Kunststoffhohlkörper 1 dargestellt, der eine Innen- und eine Außenschicht 2, 3 aufweist. Die Außenschicht 3 besteht aus modifiziertem Polyethylenterephthalat (PET), vorzugsweise aus glykolmodifiziertem Polyethylenterephthalat (PETG) und die Innenschicht 2 aus Polyethylenterephthalat (PET) oder Polyethylennaphthalat (PEN) oder einem Gemisch von Polyethylenterephthalat/Polyethylennaphthalat (PET/PEN) . Vorzugsweise weist die Außenschicht 3 an der Gesamtschichtstärke 4 einen Anteil von größer als 50 % und die Innenschicht 2 einen Anteil von kleiner als 50 % auf. Bei diesem Ausführungsbeispiel ist der Hohlkörper 1 als eine Flasche 5 ausgebildet, die mit einem Verschluß 6 versehen ist. Als Verschluß 6 kann ein nicht dargestellter Abscherverschluß oder ein wieder lösbarer (Dreh-, Schnapp- oder Klapp-) Verschluß 7 vorgesehen werden. Eine gute Dichteigenschaft des lösbaren Verschlusses 7 ergibt sich dadurch, daß dieser mit einer Dichtungsschicht 8 versehen ist, die aus einer gleichen oder ähnlichen Innen- und Außenschicht 2, 3 besteht und ggf. formelastisch (z. B. durch eine entsprechende Zusatzbeschichtung oder Scheibe) ausgebildet ist für ein besseres formschlüssiges Andrücken an einen Halsrand 9. Dadurch ergeben sich sehr gute Dichteigenschaften, da die Innenschicht 2 der Flasche 5 mit der Innenschicht 2.1 der Dichtungsschicht 8 des lösbaren Verschlusses 7 in kraftschlüssiger Verbindung steht.

Eine vorteilhafte Weiterbildung der Verschlußfunktion ist in der Figur 2 dargestellt, wobei hier der Halsrand 9 derart flansch- bzw. trompetenartig ausgestaltet ist, daß die Innenschicht 2 der Flasche 5 mit der Innenschicht 2.1 der Dichtungsschicht 8 des lösbaren Verschlusses 7 relativ großflächig in kraftschlüssiger Verbindung steht, wodurch sich eine noch bessere Dichteigenschaft ergibt.

In der Figur 3 ist in Schnittdarstellung ein aus einem Extruder 11 extrudierter, hängender Schlauch 10 dargestellt. Hieraus wird deutlich, daß trotz der niedrigen Schmelzviskosität von PET die Innenschicht 2 mit der inneren Außenschicht 3 schichtartig verbunden bzw. wie verklebt ist, womit die Außenschicht 3 eine Funktion als eine Trägerschicht der Innenschicht 2 hat, weil die Außenschicht 3 eine höhere Viskosität aufweist, beispielsweise durch PETG, womit eine Schmelzenfestigkeitserhöhung gegeben ist. Erst dadurch ist ein übliches, kostengünstiges Extrusionsblasverfahren möglich, da der Zeitverlauf vom Extrudieren bis zum Blasen so kurz ist, daß die Innenschicht 2 an der Innenseite der Außenschicht 3 im wesentlichen nicht (nach unten) verlaufen kann.

Das Verfahren zum Herstellen von Kunststoffhohlkörpern 1 mit einer Innen- und einer Außenschicht 2, 3 in einem Extrusionsblasverfahren zeichnet sich dadurch aus, daß die aus modifiziertem Polyethylenterephthalat (PET) bestehende Außenschicht 3 und die aus Polyethylenterephthalat (PET) oder Polyethylennaphthalat (PEN) oder einem Gemisch von Polyethylenterephthalat/ Polyethylennaphthalat (PET/PEN) bestehende Innenschicht 2 in einem Koextrusionsblasverfahren in einem Arbeitsgang beim Herstellprozeß zusammengebracht und als ein Schlauch 10 extrudiert und aufgeblasen werden, wobei vorzugsweise ein glykolmodifiziertes Polyethylenterephthalat (PETG) vorgesehen ist. Bis zu Beginn des Blasverfahrens ist der Schlauch 10 im wesentlichen freihängend.

## Patentansprüche

1. Extrusionsgeblasener Kunststoffhohlkörper (1), der eine Innen- und eine Außenschicht (2, 3) aufweist,
**dadurch gekennzeichnet,**
**daß** die Außenschicht (3) aus modifiziertem Polyethylenterephthalat (PET) und die Innenschicht (2) aus Polyethylenterephthalat (PET) oder Polyethylennaphthalat (PEN) oder einem Gemisch von Polyethylenterephthalat/Polyethylennaphthalat (PET/PEN) besteht.

2. Kunststoffbehälter nach Anspruch 1, **dadurch gekennzeichnet, daß** die Außenschicht (3) aus glykolmodifiziertem Polyethylenterephthalat (PETG) besteht.

3. Kunststoffhohlkörper nach mindestens Anspruch 1,
**dadurch gekennzeichnet, daß** die Außenschicht (3) an der Gesamtschichtstärke (4) einen Anteil von größer als 50 % und die Innenschicht (2) einen Anteil von kleiner als 50 % aufweist.

4. Kunststoffhohlkörper nach mindestens Anspruch 1,
**dadurch gekennzeichnet, daß** der Hohlköper (1) als eine Flasche (5) ausgebildet ist, die mit einem Verschluß (6) versehen ist.

5. Kunststoffhohlkörper nach Anspruch 4, **dadurch gekennzeichnet, daß** ein lösbarer Verschluß (7) vorgesehen ist, der mit einer Dichtungsschicht (8) versehen ist, die aus der Innen- und Außenschicht (2, 3) besteht.

6. Verfahren zum Herstellen von Kunststoffhohlkörpern (1) in einem Extrusionsblasverfahren, wobei der Kunststoffhohlkörper (1) eine Innen- und eine Außenschicht (2, 3)aufweist,
**dadurch gekennzeichnet,**
**daß** die aus modifiziertem Polyethylenterephthalat (PET) bestehende Außenschicht (3) und die aus Polyethylenterephthalat (PET) oder Polyethylennaphthalat (PEN) oder einem Gemisch von Polyethylenterephthalat/Polyethylennaphthalat (PET/PEN) bestehende Innenschicht (2) in einem Koextrusionsblasverfahren in einem Arbeitsgang beim Herstellprozeß zusammengebracht und als ein Schlauch (10) extrudiert und zu einem Kunststoffhohlkörper (1) aufgeblasen werden, und daß der Schlauch (10) bis zu Beginn des Blasverfahrens im wesentlichen freihängend ist, wobei die Außenschicht 3 eine Funktion als eine Trägerschicht der Innenschicht 2 hat.

7. Verfahren nach Anspruch 6, **dadurch gekennzeichnet, daß** als Außenschicht (3) ein glykolmodifiziertes Polyethylenterephthalat (PETG) vorgesehen ist.

## Claims

1. Extrusion blow-moulded hollow plastic structure (1), which has an inner layer (2) and an outer layer (3), **characterized in that** the outer layer (3) consists of modified polyethylene terephthalate (PET) and the inner layer (2) consists of polyethylene terephthalate (PET) or polyethylene naphthalate (PEN) or a mixture of polyethylene terephthalate/polyethylene naphthalate (PET/PEN).

2. Plastic container according to Claim 1, **characterized in that** the outer layer (3) consists of glycol-modified polyethylene terephthalate (PETG).

3. Hollow plastic structure according to at least Claim 1, **characterized in that** the outer layer (3) has a proportion of the overall layer thickness (4) of greater than 50% and the inner layer (2) has a proportion of less than 50%.

4. Hollow plastic structure according to at least Claim 1, **characterized in that** the hollow structure (1) is formed as a bottle (5) which is provided with a closure (6).

5. Hollow plastic structure according to Claim 4, **characterized in that** a releasable closure (7) which is provided with a sealing layer (8) which comprises the inner layer (2) and the outer layer (3) is provided.

6. A method for producing hollow plastic structures (1) in an extrusion blow-moulding process, the hollow plastic structure (1) having an inner layer (2) and an outer layer (3), **characterized in that** the outer layer (3), consisting of modified polyethylene terephthalate (PET), and the inner layer (2), consisting of polyethylene terephthalate (PET) or polyethylene naphthalate (PEN) or a mixture of polyethylene terephthalate/polyethylene naphthalate (PET/PEN), are brought together and extruded as a parison (10) and inflated to form a hollow plastic structure (1) in a co-extrusion blow-moulding process in one operation during the production process, and **in that** the parison (10) is substantially freely suspended up to the beginning of the blow-moulding process, the outer layer (3) having a function as a carrier layer of the inner layer (2).

7. Method according to Claim 6, **characterized in that** a glycol-modified polyethylene terephthalate (PETG) is provided as the outer layer (3).

## Revendications

1. Corps creux (1) en plastique, obtenu par extrusion-soufflage et comportant une couche interne et une externe (2, 3), **caractérisé en ce que** la couche externe (3) se compose de polyéthylènetéréphtalate (PET) modifié et **en ce que** la couche interne (2) se compose de polyéthylènetéréphtalate (PET) ou de polyéthylènenaphtalate (PEN) ou d'un mélange de polyéthylènetéréphtalate/polyéthylènenaphtalate (PET/PEN).

2. Récipient en plastique selon la revendication 1, **caractérisé en ce que** la couche externe (3) se compose de polyéthylènetéréphtalate modifié par des glycols (PETG).

3. Corps creux en plastique selon au moins la revendication 1, **caractérisé en ce que** la couche externe (3) représente, par rapport à l'épaisseur totale de couche (4), une proportion supérieure à 50 % et la couche interne (2) une proportion inférieure à 50 %.

4. Corps creux en plastique selon au moins la revendication 1, **caractérisé en ce que** le corps creux (1) est conformé comme une bouteille (5), munie d'un obturateur (6).

5. Corps creux en plastique selon la revendication 4, **caractérisé en ce qu'** un obturateur amovible (7) est prévu, qui est muni d'une couche d'étanchéité (8) qui se compose des couches interne et externe (2, 3).

6. Procédé de fabrication de corps creux (1) en plastique, selon un procédé d'extrusion-soufflage, dans lequel le corps creux (1) en plastique comporte une couche interne et une externe (2, 3), **caractérisé en ce que** la couche externe (3) composée de polyéthylènetéréphtalate (PET) modifié, et la couche interne (2), composée de polyéthylènetéréphtalate (PET) ou de polyéthylènenaphtalate (PEN) ou d'un mélange de polyéthylènetéréphtalate/polyéthlènenaphtalate (PET/PEN), sont réunies entre elles dans un procédé d'extrusion-soufflage dans une phase opératoire du processus de fabrication, sont extrudées sous forme de gaine (10) et sont soufflées en un corps creux (1) en plastique, et **en ce que** la gaine (10) est essentiellement suspendue librement jusqu'au commencement du procédé de soufflage, la couche externe 3 assurant une fonction de couche porteuse de la couche interne 2.

7. Procédé selon la revendication 6, **caractérisé en ce qu'**en tant que couche externe (3), un polyéthylènetéréphtalate modifié par glycols (PETG) est prévu.
